# FASCICULE DE BREVET EUROPEEN

(11) **EP 3 853 123 B1**
(45) Date de publication et mention de la délivrance du brevet: **01.03.2023**
(21) Numéro de dépôt: 19790657.1
(22) Date de dépôt: 17.09.2019
(51) Int. Cl.: B64C 25/42, B60T 5/00, B64C 25/40, B60L 1/00, B60L 1/02, B60L 3/00, B60L 7/10, F16D 65/847

(54) **TRAIN D'ATTERRISSAGE D'UN AÉRONEF ET PROCÉDÉ DE REFROIDISSEMENT D'UN MOTEUR ÉLECTRIQUE DE TAXIAGE ET DES FREINS D'UN TEL TRAIN D'ATTERRISSAGE**
FAHRWERK FÜR EIN FLUGZEUG UND VERFAHREN ZUR KÜHLUNG EINES ELEKTRISCHEN TAXIMOTORS UND DER BREMSEN EINES SOLCHEN FAHRWERKS
LANDING GEAR FOR AN AIRCRAFT AND METHOD FOR COOLING AN ELECTRIC TAXIING MOTOR AND THE BRAKES OF SUCH A LANDING GEAR

(30) Priorité: 19.09.2018 FR 1858486
(43) Date de publication de la demande: 28.07.2021
(73) Titulaire: Safran Electrical & Power, 31702 Blagnac Cedex (FR); Safran Landing Systems, 78140 Vélizy-Villacoublay (FR)
(72) Inventeur: FONTALBAT, Thierry, 31702 BLAGNAC CEDEX (FR); BLANCO, Loic, 31702 BLAGNAC CEDEX (FR); CASSAGNET, Christophe, 31702 BLAGNAC CEDEX (FR); CHALLAS, Florent, 31702 BLAGNAC CEDEX (FR); GALY, Quentin, 31702 BLAGNAC CEDEX (FR); WISSEMER, Eric, 31702 BLAGNAC CEDEX (FR); JABER, Sylvain, 77550 MOISSY-CRAMAYEL (FR)
(74) Mandataire: Gevers & Orès
(86) Numéro de dépôt international: PCT/FR2019/052162
(87) Numéro de publication internationale: WO 2020/058624

(56) Documents cités:
- EP-A1- 3 165 455
- WO-A1-2013/123993
- WO-A1-2014/202457
- DE-A1- 4 235 815
- US-A1- 2012 104 159
- US-A1- 2015 266 566

## Description

### DOMAINE TECHNIQUE

L'invention concerne un procédé de refroidissement à la fois d'un moteur électrique d'un système de taxiage électrique et des freins d'un système de freinage d'un train d'atterrissage d'un aéronef.

L'invention concerne également un train d'atterrissage d'un aéronef comportant un système de taxiage électrique, un système de freinage et un système de refroidissement d'un moteur électrique dudit système de taxiage électrique et des freins dudit système de freinage.

### ÉTAT DE LA TECHNIQUE

L'état de la technique comporte notamment les demandes de brevet WO-A1-2013/123993, US-A1-2012/104159, DE-A1-42 35 815, US-A1-2015/266566, EP-A1-3 165 455 et WO-A1-2014/202457. Plus précisément, le brevet WO-A1-2013/123993 divulgue une unité d'entraînement pour roue au sol d'avion associée à une unité de frein servant à freiner la roue au sol, l'unité d'entraînement comportant un moteur d'entraînement qui peut être couplé de façon motrice à la roue au sol; et un système de refroidissement comprenant au moins une unité de refroidissement de transmission qui est configurée pour générer un flux d'air de refroidissement de transmission servant à refroidir l'unité d'entraînement et une unité de refroidissement de frein configurée pour générer un flux d'air de refroidissement de frein en aspirant de l'air à partir de l'unité de frein.

De façon connue, un aéronef peut être muni d'un système de taxiage électrique. Le taxiage est une opération qui regroupe l'ensemble des étapes de roulage de l'aéronef avant le décollage et après l'atterrissage de l'aéronef.

Un tel système de taxiage électrique comporte au moins un moteur électrique agencé au niveau du train d'atterrissage principal de l'aéronef, et configuré pour entraîner en rotation au moins une roue du train d'atterrissage principal de l'aéronef. Le moteur électrique est généralement alimenté en électricité par un groupe auxiliaire de puissance (APU) de l'aéronef.

Ainsi, un aéronef équipé d'un tel système de taxiage électrique peut se déplacer au sol de manière autonome, sur la base d'une énergie électrique, c'est-à-dire sans utiliser le ou les turboréacteur(s) de l'aéronef ou un système de tractage.

En fonctionnement, le moteur électrique chauffe et nécessite donc d'être refroidi. Toutefois, un tel moteur électrique ne tourne généralement pas assez vite pour entraîner, en plus de la roue du train d'atterrissage principal de l'aéronef, une roue de ventilation qui permettrait de générer un flux de refroidissement dudit moteur électrique.

De ce fait, le moteur électrique est refroidi au moyen d'un ventilateur autonome, c'est-à-dire d'un ventilateur muni de son propre moteur. Néanmoins, ceci génère des problèmes d'encombrement au niveau du train d'atterrissage principal de l'aéronef où est installé ledit moteur électrique.

De plus, l'aéronef est muni d'un système de freinage agencé au niveau du train d'atterrissage principal de l'aéronef et comportant des freins configurés pour ralentir, puis arrêter les roues du train d'atterrissage principal.

En fonctionnement, comme les freins s'échauffent, il est nécessaire de les refroidir. Pour cela, un système de ventilation des freins est monté sur le train d'atterrissage principal, au niveau de l'axe des roues.

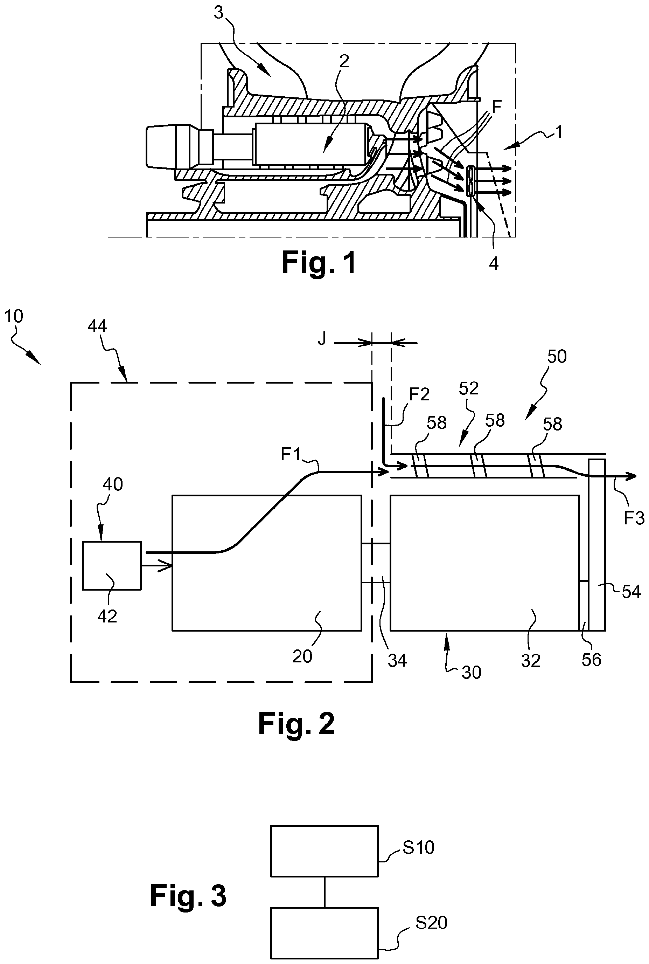

Un tel système de ventilation est par exemple représenté sur la figure 1, et comporte généralement un ventilateur 4 (BCF, acronyme de l'expression anglaise « Brake Cooling Fan ») du côté extérieur de la jante 1 qui est configuré pour aspirer un flux d'air de sortie des freins 2, représenté par les flèches F, lorsque lesdits freins 2 sont activés pour ralentir, puis arrêter la roue 3 du train d'atterrissage principal, et également lors de la phase d'arrêt à la porte d'embarquement. Ainsi, le ventilateur BCF permet de refroidir les freins 2, tant qu'ils sont à une température supérieure à 300°C. Lors de cette phase la température de l'air aspiré peut atteindre 170°C. Toutefois, un ventilateur BCF est volumineux, ce qui entraîne des problèmes d'encombrement au niveau du train d'atterrissage principal de l'aéronef.

Ainsi, le système de taxiage électrique de l'aéronef est séparé du système de ventilation des freins, et chaque système comporte son propre ventilateur configuré pour générer un flux de refroidissement du moteur électrique du système de taxiage électrique ou des freins du système de freinage.

Il existe donc un besoin d'un système permettant de combiner le refroidissement du moteur électrique de taxiage et le refroidissement des freins, tout en réduisant la masse et l'encombrement d'un tel système au sein de l'aéronef.

La présente invention a notamment pour but d'apporter une solution simple, économique et efficace à ces problèmes, permettant d'éviter les inconvénients de la technique connue.

### OBJECTIF DEL'INVENTION

La présente invention a pour objectif de proposer un système et un procédé permettant un couplage du refroidissement du moteur électrique du système de taxiage électrique et des freins du système de freinage du train d'atterrissage de l'aéronef.

### EXPOSÉ DE L'INVENTION

A cet effet, l'invention concerne un train d'atterrissage pour un aéronef comportant :
- au moins une roue,
- un système de taxiage électrique comprenant un moteur électrique, dit moteur électrique de taxiage, adapté pour entraîner en rotation ladite au moins une roue,
- un système de freinage comprenant des freins adaptés pour ralentir ou arrêter la rotation de ladite au moins une roue, et
- un système de refroidissement dudit moteur électrique de taxiage et desdits freins comprenant des moyens de ventilation qui comprennent une roue de ventilation,
caractérisé en ce que les moyens de ventilation sont adaptés pour mélanger un flux d'air provenant desdits freins et un flux d'air provenant de l'extérieur dudit train d'atterrissage et pour ventiler ledit moteur électrique de taxiage au moyen dudit mélange des flux d'air, et en ce que la roue de ventilation est configurée pour aspirer ledit mélange des flux d'air et en ce que les moyens de ventilation comprennent un moteur adapté pour entraîner en rotation ladite roue de ventilation.

Le train d'atterrissage selon l'invention permet avantageusement de résoudre le problème de refroidissement du moteur électrique de taxiage couplé au refroidissement des freins du train d'atterrissage de l'aéronef.

En particulier, le système de refroidissement selon l'invention permet avantageusement de réaliser la fonction du ventilateur BCF de l'art antérieur pour refroidir les freins au moyen des moyens de ventilation communs entre lesdits freins et le moteur électrique de taxiage. En effet, les moyens de ventilation permettent d'aspirer le flux d'air provenant desdits freins, et donc de récupérer le flux d'air à température élevée (environ 170°C) venant des freins, ce qui qui permet de les refroidir.

De plus, le système de refroidissement selon l'invention permet avantageusement de refroidir le moteur électrique de taxiage au moyen du flux d'air provenant des freins. En effet, les moyens de ventilation permettent un mélange entre le flux d'air à température élevée provenant des freins et le flux d'air venant de l'extérieur du train d'atterrissage, c'est-à-dire à température ambiante de la piste d'atterrissage/de décollage de l'aéronef, ce qui permet de refroidir le flux d'air provenant desdits freins, puis de l'utiliser pour le refroidissement du moteur électrique de taxiage. En particulier, le mélange du flux d'air provenant des freins et du flux d'air venant de l'extérieur du train d'atterrissage permet d'homogénéiser la température de l'air de refroidissement du moteur électrique de taxiage.

L'utilisation d'un système de taxiage électrique permet avantageusement de réduire la consommation de carburant de l'aéronef (d'environ 4%) lors de la mobilité dudit aéronef au sol.

De plus, le système de refroidissement des freins permet une ventilation des freins, ce qui permet avantageusement de réduire le temps d'escale de l'aéronef.

Le train d'atterrissage de l'aéronef peut être le train d'atterrissage principal de l'aéronef.

De préférence, les moyens de ventilation comportent une unique roue de ventilation.

Autrement dit, la roue de ventilation est configurée pour aspirer en parallèle le flux d'air provenant des freins et le flux d'air provenant de l'extérieur du train d'atterrissage.

Ainsi, le système de refroidissement selon l'invention ne comporte qu'une roue de ventilation permettant de réaliser à la fois la fonction de refroidissement des freins et la fonction de refroidissement du moteur électrique de taxiage par l'intermédiaire du mélange du flux d'air chaud provenant des freins et du flux d'air frais provenant de l'extérieur du train d'atterrissage.

Le moteur et la roue de ventilation forment un ventilateur autonome. Ceci permet de palier le fait que le moteur électrique de taxiage ne tourne pas assez vite pour entraîner à la fois une roue du train d'atterrissage de l'aéronef et une roue de ventilation adaptée pour le refroidir.

Les moyens de ventilation peuvent comporter au moins une série d'ailettes positionnée le long du trajet du mélange des flux d'air.

De façon avantageuse, cette série d'ailettes permet une dissipation de calories le long du trajet du mélange des flux d'air.

De préférence, les moyens de ventilation comportent une pluralité de séries d'ailettes positionnée le long du trajet du mélange des flux d'air.

Les ailettes de la ou chaque série d'ailettes peuvent être disposées en quinconce. Ceci permet avantageusement d'éviter le développement de la couche limite, ce qui perturberait l'échange thermique entre le moteur électrique de taxiage et l'air.

De préférence, le débit du flux d'air provenant des freins est inférieur au débit du flux d'air provenant de l'extérieur du train d'atterrissage.

Avantageusement, ceci permet d'avoir une température du mélange des flux d'air inférieure à la température du flux d'air provenant des freins, et donc d'assurer la fonction de refroidissement du moteur électrique de taxiage sur la base dudit mélange des flux d'air.

En outre, ceci permet de généré un débit du flux d'air provenant des freins suffisant pour un refroidissement correct desdits freins.

Les moyens de ventilation du système de ventilation peuvent être adaptés pour mélanger les flux d'air en amont du moteur électrique de taxiage.

La roue de ventilation des moyens de ventilation peut être agencée en aval du moteur électrique de taxiage.

La roue de ventilation peut être configurée pour aspirer le mélange des flux d'air le long du moteur électrique de taxiage.

La au moins une série d'ailettes des moyens de ventilation peut être positionnée le long du moteur électrique de taxiage, notamment entre l'amont et l'aval dudit moteur électrique de taxiage. En particulier, les ailettes peuvent être disposées au-dessus dudit moteur électrique de taxiage.

De façon avantageuse, cette série d'ailettes permet de dissiper les calories du moteur électrique de taxiage, le long dudit moteur électrique de taxiage.

De préférence, les moyens de ventilation comportent une pluralité de séries d'ailettes positionnées entre l'amont et l'aval du moteur électrique de taxiage, le long dudit moteur électrique de taxiage.

Le train d'atterrissage peut comprendre un capot entourant le système de freinage. Les moyens de ventilation peuvent être agencés avec un jeu par rapport audit capot.

Un tel jeu entre les moyens de ventilation et le capot permet l'aspiration d'un flux d'air provenant de l'extérieur du train d'atterrissage.

Le jeu entre les moyens de ventilation et le capot peut être conformé pour que, dans le mélange des flux d'air, le débit du flux d'air provenant de l'extérieur du train d'atterrissage soit supérieur au débit du flux d'air provenant des freins.

Le train d'atterrissage peut comprendre une boîte à engrenages reliée au moteur électrique de taxiage et à la au moins une roue.

Ceci permet avantageusement d'augmenter la vitesse de rotation de la roue.

L'invention concerne en outre un procédé de refroidissement d'un moteur électrique, dit moteur électrique de taxiage, d'un système de taxiage électrique et des freins d'un système de freinage d'un train d'atterrissage selon l'invention, caractérisé en ce que ledit procédé de refroidissement comprend les étapes consistant en :
- un mélange d'un flux d'air provenant desdits freins et d'un flux d'air provenant de l'extérieur dudit train d'atterrissage, et
- une aspiration dudit mélange des flux d'air de manière à ventiler ledit moteur électrique de taxiage.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en coupe d'une partie d'un train d'atterrissage d'un aéronef selon l'art antérieur tel que décrit précédemment,
- la figure 2 est une vue schématique en coupe d'un train d'atterrissage d'un aéronef selon l'invention, et
- la figure 3 est un organigramme des étapes du procédé de refroidissement d'un moteur électrique d'un système de taxiage électrique et des freins d'un système de freinage d'un train d'atterrissage d'un aéronef selon l'invention.

### DESCRIPTION DÉTAILLÉE

La figure 2 représente un train d'atterrissage 10 d'un aéronef selon l'invention comportant au moins une roue 20, un système de taxiage 30 électrique et un système de freinage 40. Le train d'atterrissage 10 peut être le train d'atterrissage principal de l'aéronef.

Le système de taxiage 30 électrique comprend un moteur électrique 32 de taxiage adapté pour entraîner en rotation la roue 20. En particulier, le moteur électrique 32 de taxiage peut être configuré pour entraîner en rotation uniquement la roue 20. Le moteur électrique 32 de taxiage peut être positionné directement sur un moyeu (non représenté) du train d'atterrissage.

Le système de taxiage 30 électrique peut être relié à la roue 20 au moyen d'une boîte à engrenages 34. La boîte à engrenages 34 permet de démultiplier la vitesse de rotation entre la roue 20 et le moteur électrique 32 de taxiage.

Le système de freinage 40 comprend des freins 42 adaptés pour ralentir, puis arrêter, la rotation de la roue 20. Les freins 42 peuvent être des freins à disques, par exemple des freins réalisés en carbone.

Un train d'atterrissage 10 peut comporter une pluralité de roues 20 qui peuvent être entraînées en rotation par un système de taxiage 30 électrique comportant au moins un moteur électrique 32 de taxiage. Par exemple, une des roues 20 ou chaque roue 20 peut être entraînée en rotation par le moteur électrique 32 de taxiage. Le système de freinage 40 peut comporter des freins 42 agencés sur chaque roue 20.

Un capot 44 peut être agencé de sorte à entourer au moins le système de freinage 40. Sur la figure 2, le capot 44 est représenté en pointillés et entoure à la fois la roue 20 et le système de freinage 40.

Le train d'atterrissage 10 comporte également un système de refroidissement 50 du moteur électrique 32 de taxiage et des freins 42.

Le système de refroidissement 50 comprend des moyens de ventilation 52 adaptés pour mélanger un flux d'air provenant des freins 42, noté F1, et un flux d'air provenant de l'extérieur du train d'atterrissage 10, noté F2.

Les moyens de ventilation 52 peuvent être adaptés pour mélanger les flux d'air en amont du moteur électrique 32 de taxiage.

En fonctionnement, les freins 42 chauffent, de sorte qu'un flux d'air F1 à température élevée, notamment entre 150°C et 200°C, par exemple à environ 170°C, est généré au niveau des freins 42. Les moyens de ventilation 52 sont configurés pour aspirer ce flux d'air F1 chaud provenant des freins 42, ce qui permet de les refroidir.

Les moyens de ventilation 52 sont également adaptés pour ventiler le moteur électrique 32 de taxiage au moyen du mélange des flux d'air, noté F3.

Le flux d'air F2 provenant de l'extérieur du train d'atterrissage 10 est à température ambiante de la piste d'atterrissage/de décollage de l'aéronef, notamment entre 0°C et 30°C, par exemple à environ 15°C. Le mélange du flux d'air F2 provenant de l'extérieur du train d'atterrissage 10 et du flux d'air F1 chaud provenant des freins 42 permet de refroidir le flux d'air F1 provenant des freins 42, et donc d'homogénéiser la température du mélange des flux d'air F3. Ensuite, ce mélange des flux d'air F3 est utilisé pour refroidir le moteur électrique 32 de taxiage, notamment pour que le moteur électrique 32 de taxiage soit à une température compatible avec son fonctionnement.

Les moyens de ventilation 52 peuvent être agencés avec un jeu, noté J, par rapport au capot 44. Ce jeu J permet l'aspiration du flux d'air F2 provenant de l'extérieur du train d'atterrissage 10.

En particulier, le jeu J entre les moyens de ventilation 52 et le capot 44 peut être conformé pour que, dans le mélange des flux d'air F3, le débit du flux d'air F2 provenant de l'extérieur du train d'atterrissage 10 soit supérieur au débit du flux d'air F1 provenant des freins 42. Autrement dit, le débit du flux d'air F1 provenant des freins 42 est inférieur au débit du flux d'air F2 provenant de l'extérieur du train d'atterrissage 10 afin de garantir que la température du mélange des flux d'air F3 soit inférieure à la température du flux d'air F1 provenant des freins 42.

Les moyens de ventilation 52 peuvent comporter une roue de ventilation 54 configurée pour aspirer le mélange des flux d'air F3. En particulier, la roue de ventilation 54 aspire en parallèle le flux d'air F1 provenant des freins 42 et le flux d'air F2 provenant de l'extérieur du train d'atterrissage 10.

La roue de ventilation 54 peut être agencée en aval du moteur électrique 32 de taxiage. Dans ce cas, la roue de ventilation 54 peut être configurée pour aspirer le mélange des flux d'air F3 le long du moteur électrique 32 de taxiage.

Les moyens de ventilation 52 ne comportent ici qu'une seule roue de ventilation 54 pour refroidir à la fois les freins 42 et le moteur électrique 32 de taxiage.

Les moyens de ventilation 52 peuvent comporter un moteur 56 adapté pour entraîner en rotation la roue de ventilation 54. Le moteur 56 et la roue de ventilation 54 forment ainsi un ventilateur autonome. En particulier, le moteur 56 peut être agencé en bout du moteur électrique 32 de taxiage.

Les moyens de ventilation 52 peuvent comporter une ou une pluralité de série(s) d'ailettes 58 positionnée(s) le long du trajet du mélange des flux d'air F3 de sorte à évacuer les calories du moteur électrique 32 de taxiage. En particulier, la ou chaque série d'ailettes 58 peut être positionnée le long du moteur électrique 32 de taxiage, notamment entre l'amont et l'aval dudit moteur électrique 32 de taxiage. En particulier, la ou chaque série d'ailettes 58 peuvent être disposées au-dessus du moteur électrique 32 de taxiage.

Les ailettes de la ou chaque série d'ailettes 58 peuvent être disposées en quinconce. Autrement dit, les ailettes d'une série d'ailettes 58 ne sont pas alignées le long du moteur électrique 32 de taxiage.

Les ailettes de la ou chaque série d'ailettes 58 peuvent être identiques, c'est-à-dire qu'elles peuvent présenter les mêmes caractéristiques géométriques et dimensionnelles. En variante, les ailettes de la ou chaque série d'ailettes 58 peuvent être différentes les unes des autres.

Les ailettes de la ou chaque série d'ailettes 58 peuvent être espacées longitudinalement d'un écartement constant. En variante, le pas entre deux ailettes d'une même série d'ailettes 58, ou entre les ailettes de deux séries d'ailettes 58 peut être variable.

La figure 3 représente les étapes du procédé de refroidissement d'un moteur électrique 32 de taxiage électrique et des freins 42 du train d'atterrissage 10 tel que décrit précédemment.

Le procédé peut comprendre une étape de récupération du flux d'air F1 provenant des freins 42, et une étape de récupération du flux d'air F2 provenant de l'extérieur du train d'atterrissage 10.

Le procédé comprend une étape S10 de mélange du flux d'air F1 provenant des freins 42 et du flux d'air F2 provenant de l'extérieur du train d'atterrissage 10.

Le procédé comprend également une étape S20 d'aspiration du mélange des flux d'air F3 de manière à ventiler le moteur électrique 32 de taxiage.

Préalablement à l'étape S10, le procédé peut comprendre une étape de calibration du jeu J entre le capot 44 et les moyens de ventilation 52.

En particulier, au cours de l'étape de calibration, le jeu J peut être calibré de sorte que le débit du flux d'air F1 provenant des freins 42 soit suffisant pour assurer le refroidissement desdits freins 42.

## Revendications

1. Train d'atterrissage (10) pour un aéronef, comportant :
- au moins une roue (20),
- un système de taxiage électrique (30) comprenant un moteur électrique, dit moteur électrique (32) de taxiage, adapté pour entraîner en rotation ladite au moins une roue (20),
- un système de freinage (40) comprenant des freins (42) adaptés pour ralentir ou arrêter la rotation de ladite au moins une roue (20), et
- un système de refroidissement (50) dudit moteur électrique (32) de taxiage et desdits freins (42) comprenant des moyens de ventilation (52) qui comprennent une roue de ventilation (54),
**caractérisé en ce que** les moyens de ventilation (52) sont adaptés pour mélanger un flux d'air (F1) provenant desdits freins (42) et un flux d'air (F2) provenant de l'extérieur dudit train d'atterrissage (10) et pour ventiler ledit moteur électrique (32) de taxiage au moyen dudit mélange des flux d'air (F3), et **en ce que** la roue de ventilation (54) est configurée pour aspirer ledit mélange des flux d'air (F3), et **en ce que** les moyens de ventilation (52) comprennent un moteur (56) adapté pour entraîner en rotation ladite roue de ventilation (54).

2. Train d'atterrissage (10) selon la revendication précédente, dans lequel lesdits moyens de ventilation (52) comportent au moins une série d'ailettes (58) positionnée le long du trajet dudit mélange des flux d'air (F3).

3. Train d'atterrissage (10) selon la revendication précédente, dans lequel les ailettes de ladite au moins une série d'ailettes (58) sont disposées en quinconce.

4. Train d'atterrissage (10) selon l'une des revendications précédentes, comprenant un capot (44) entourant ledit système de freinage (40), et dans lequel lesdits moyens de ventilation (52) sont agencés avec un jeu (J) par rapport audit capot (44).

5. Train d'atterrissage (10) selon l'une des revendications précédentes, comprenant une boîte à engrenages (34) reliée audit moteur électrique (32) de taxiage et à ladite au moins une roue (20).

6. Train d'atterrissage (10) selon l'une des revendications précédentes, dans lequel lesdits moyens de ventilation (52) comportent une unique roue de ventilation (54).

7. Train d'atterrissage (10) selon l'une des revendications précédentes, dans lequel lesdits moyens de ventilation (52) sont agencés en aval dudit moteur électrique de taxiage (52).

8. Train d'atterrissage (10) selon l'une des revendications précédentes, quand elle dépend de l'une des revendications 2 ou 3, dans lequel ladite au moins une série d'ailettes (58) est positionnée le long dudit moteur électrique (32) de taxiage.

9. Train d'atterrissage (10) selon l'une des revendications précédentes, quand elle dépend de l'une des revendications 2 ou 3, dans lequel ladite au moins une série d'ailettes (58) est positionnée au-dessus dudit moteur électrique (32) de taxiage.

10. Procédé de refroidissement d'un moteur électrique, dit moteur électrique (32) de taxiage, d'un système de taxiage électrique (30) et des freins (42) d'un système de freinage (40) d'un train d'atterrissage (10) selon l'une des revendications précédentes, **caractérisé en ce qu'**il comprend les étapes consistant en :
- un mélange (S10) d'un flux d'air (F1) provenant desdits freins (42) et d'un flux d'air (F2) provenant de l'extérieur dudit train d'atterrissage (10), et
- une aspiration (S20) dudit mélange des flux d'air (F3) de manière à ventiler ledit moteur électrique (32) de taxiage.

## Patentansprüche

1. Fahrwerk (10) für ein Flugzeug, umfassend:
- mindestens ein Rad (20),
- ein elektrisches Taxiing-System (30), das einen als elektrischen Taxiing-Motor (32) bezeichneten Elektromotor umfasst, der geeignet ist, das mindestens eine Rad (20) drehend anzutreiben,
- ein Bremssystem (40), das Bremsen (42) umfasst, die geeignet sind, die Drehung des mindestens einen Rades (20) zu verlangsamen oder anzuhalten, und
- ein System zum Kühlen (50) des elektrischen Taxiing-Motors (32) und der Bremsen (42), das Lüftungsmittel (52) umfasst, die ein Lüftungsrad (54) umfassen,
**dadurch gekennzeichnet, dass** die Lüftungsmittel (52) geeignet sind, einen von den Bremsen (42) kommenden Luftstrom (F1) und einen von der Außenseite des Fahrwerks (10) kommenden Luftstrom (F2) zu mischen und elektrischen Taxiing-Motor (32) mittels der Luftstrommischung (F3) zu belüften, und dadurch, dass das Lüftungsrad (54) dafür ausgelegt ist, die Luftstrommischung (F3) anzusaugen, und dadurch, dass die Lüftungsmittel (52) einen Motor (56) umfassen, der geeignet ist, das Lüftungsrad (54) drehend anzutreiben.

2. Fahrwerk (10) nach dem vorstehenden Anspruch, wobei die Belüftungsmittel (52) mindestens eine Schaufelreihe (58) umfassen, die entlang des Pfades der Luftstrommischung (F3) positioniert ist.

3. Fahrwerk (10) nach dem vorstehenden Anspruch, wobei die Schaufeln der mindestens einen Schaufelreihe (58) versetzt angeordnet sind.

4. Fahrwerk (10) nach einem der vorstehenden Ansprüche, das eine Haube (44) umfasst, die das Bremssystem (40) umgibt, und wobei die Lüftungsmittel (52) in Bezug auf die Haube (44) mit einem Spiel (J) eingerichtet sind.

5. Fahrwerk (10) nach einem der vorstehenden Ansprüche, das ein Getriebe (34) umfasst, das mit dem elektrischen Taxiing-Motor (32) und dem mindestens einen Rad (20) verbunden ist.

6. Fahrwerk (10) nach einem der vorstehenden Ansprüche, wobei die Lüftungsmittel (52) ein einziges Lüftungsrad (54) umfassen.

7. Fahrwerk (10) nach einem der vorstehenden Ansprüche, wobei die Lüftungsmittel (52) stromabwärts des elektrischen Taxiing-Motors (52) eingerichtet sind.

8. Fahrwerk (10) nach einem der vorstehenden Ansprüche in Abhängigkeit von einem der Ansprüche 2 oder 3, wobei die mindestens eine Schaufelreihe (58) entlang des elektrischen Taxiing-Motors (32) positioniert ist.

9. Fahrwerk (10) nach einem der vorstehenden Ansprüche in Abhängigkeit von einem der Ansprüche 2 oder 3, wobei die mindestens eine Schaufelreihe (58) über dem elektrischen Taxiing-Motor (32) positioniert ist.

10. Verfahren zum Kühlen eines als elektrischen Taxiing-Motor (32) bezeichneten Elektromotors, eines elektrischen Taxiing-Systems (30) und der Bremsen (42) eines Bremssystems (40) eines Fahrwerks (10) nach einem der vorstehenden Ansprüche, **dadurch gekennzeichnet, dass** es die Schritte umfasst, bestehend im:
- Mischen (S10) eines von den Bremsen (42) kommenden Luftstroms (F1) und eines von der Außenseite des Fahrwerks (10) kommenden Luftstroms (F2), und
- Ansaugen (S20) der Luftstrommischung (F3), um den elektrischen Taxiing-Motor (32) zu belüften.

## Claims

1. A landing gear (10) for an aircraft, comprising:
- at least one wheel (20),
- an electric taxiing system (30) comprising an electric motor, said electric taxiing motor (32), capable of rotating said at least one wheel (20),
- a braking system (40) comprising brakes (42) capable of slowing down or stopping the rotation of said at least one wheel (20), and
- a system (50) for cooling said electric taxiing motor (32) and said brakes (42) comprising ventilation means (52) comprising a ventilation wheel (54),
**characterised in that** the ventilation means (52) are capable of mixing an air flow (F1) originating from said brakes (42) and an air flow (F2) originating from outside said landing gear (10) and of ventilating said electric taxiing motor (32) by means of said mixture of air flows (F3), and **in that** the ventilation means (52) comprise a motor (56) capable of rotating said ventilation wheel (54).

2. The landing gear (10) according to the preceding claim, wherein said ventilation means (52) comprise at least one series of fins (58) positioned along the path of said mixture of air flows (F3).

3. The landing gear (10) according to the preceding claim, wherein the fins of said at least one series of fins (58) are arranged in a staggered pattern.

4. The landing gear (10) according to any of the preceding claims, comprising a cowl (44) surrounding said braking system (40), and wherein said ventilation means (52) are arranged with a clearance (J) with respect to said cowl (44).

5. The landing gear (10) according to any of the preceding claims, comprising a gearbox (34) connected to said electric taxiing motor (32) and to said at least one wheel (20).

6. The landing gear (10) according to any of the preceding claims, wherein said ventilation means (52) comprise a single ventilation wheel (54).

7. The landing gear (10) according to any of the preceding claims, wherein said ventilation means (52) are arranged downstream of said electric taxiing motor (52).

8. The landing gear (10) according to one of the preceding claims, when dependent on one of claims 2 or 3, wherein said at least one series of fins (58) is positioned along said electric taxiing motor (32).

9. The landing gear (10) according to any of the preceding claims, when dependent on any of claims 2 or 3, wherein said at least one series of fins (58) is positioned above said electric taxiing motor (32).

10. A method for cooling an electric motor, so-called electric taxiing motor (32), an electric taxiing system (30) and brakes (42) of a braking system (40) of a landing gear (10) of an aircraft according to one of the preceding claims, **characterised in that** it comprises the steps consisting of:
- mixing (S10) an air flow (F1) originating from said brakes (42) and an air flow (F2) originating from outside said landing gear (10), and
- sucking (S20) said mixture of air flow (F3) so as to ventilate said electric taxiing motor (32).
